# FASCICULE DE BREVET EUROPEEN

(11) **EP 0 456 582 B1**
(45) Date de publication et mention de la délivrance du brevet: **03.04.1996**
(21) Numéro de dépôt: 91401223.2
(22) Date de dépôt: 10.05.1991
(51) Int. Cl.: F24D 12/02

(54) **Chaudière à condensation et fluide caloporteur**
Brennwertkessel mit Wärmetransportflüssigkeit
Condensing boiler with heat transport fluid

(30) Priorité: 11.05.1990 FR 9005895
(43) Date de publication de la demande: 13.11.1991
(73) Titulaire: GEMINOX, Société Anonyme, F-29223 Saint Thegonnec (FR)
(72) Inventeur: Kerautret, André, F-29230 Landivisiau (FR)
(74) Mandataire: Chambon, Gérard

(56) Documents cités:
- EP-A- 0 192 862
- FR-A- 1 400 745
- FR-A- 2 444 899

## Description

L'invention concerne une chaudière à condensation et à fluide caloporteur.

Les chaudières à condensation présentent de nombreux avantages et notamment un excellent rendement.

Parmi les chaudières à condensation connues, qui sont généralement munies d'un échangeur de chaleur entre un fluide caloporteur et les gaz de combustion d'un brûleur, le fluide caloporteur assurant le chauffage d'une installation, il en existe dont l'échangeur fait aussi office de condenseur.

Dans ce type de chaudières, l'échangeur doit obligatoirement être fabriqué en totalité en matériau de haute résistance à la corrosion, par exemple en acier inoxydable, d'un coût particulièrement élevé.

Selon un autre type connu de chaudières, celles-ci comportent un premier échangeur pour le fluide de chauffage, en matériau peu coûteux destiné à capter la plus grande partie de l'énergie produite par le brûleur. En série à ce premier échangeur, on ajoute un condenseur en matériau résistant à la corrosion, lequel est destiné à capter l'énergie résiduelle des gaz de combustion et à provoquer la condensation.

Dans la demande FR-A-2444899, on décrit d'ailleurs une chaudière à condensation et fluide caloporteur pourvue d'un brûleur; d'un échangeur de chaleur qui est destiné aux échanges thermiques entre les gaz de combustion et ledit fluide caloporteur, et qui comporte un corps creux dans la partie inférieure duquel est aménagé ledit brûleur, et une chemise de circulation du fluide caloporteur; et d'un condenseur dans lequel circule le fluide, et qui est disposé en série avec ledit échangeur, celui-ci et ledit condenseur étant sensiblement verticaux et communiquant entre eux pour permettre l'écoulement des gaz de combustion par leurs parties hautes, tandis que les évacuations de ces derniers et des condensats sont prévues en partie basse du condenseur de manière à assurer une circulation des gaz de combustion de bas en haut dans l'échangeur et de haut en bas dans le condenseur, les condensats s'écoulant dans le même sens que les gaz de combustion.

Par ailleurs, la demande EP-A-0192862 décrit aussi un système notamment pourvu d'une chaudière et d'au moins un échangeur de chaleur monté en série.

L'invention concerne une chaudière du type mentionné à propos de la demande de brevet Français précitée. Une chaudière selon l'invention est notamment remarquable en ce que la partie haute du circuit de fluide du condenseur communique directement avec la chemise de circulation du fluide par au moins une canalisation branchée en partie haute de cette dernière.

Un mode de réalisation est remarquable en ce que son condenseur présente un faisceau de tubes sensiblement parallèles et verticaux destinés à la circulation des gaz de combustion, le fluide circulant entre lesdits tubes tandis qu'un collecteur des condensats est aménagé sous les tubes qui débouchent dans ledit collecteur.

Selon un mode de réalisation avantageux, la partie basse de la chemise de circulation du fluide caloporteur est munie d'au moins deux canalisations de départ du fluide chauffé pour au moins deux circuits de chauffage, tandis que des canalisations de retour desdits circuits de chauffage sont branchées sur le condenseur.

Dans ce cas et selon un mode de réalisation, l'une des canalisations de départ est prévue pour au moins deux circuits de chauffage, tandis qu'au moins l'une des canalisations de retour des circuits de chauffage est branchée en partie haute du condenseur et qu'au moins une autre est branchée en partie basse.

De préférence, l'une au moins des canalisations de départ de fluide chauffé est pourvue d'une vanne mélangeuse branchée sur le circuit de fluide du condenseur.

Selon un mode de réalisation particulier tel qu'indiqué ci-avant, l'une des canalisations de départ est prévue pour un premier circuit de chauffage de local et comporte une vanne mélangeuse branchée sur le circuit de fluide du condenseur, sa canalisation de retour étant branchée en partie basse dudit condenseur tandis que l'autre canalisation de départ est prévue pour au moins un circuit de chauffage d'eau sanitaire, sa canalisation de retour étant branchée en partie haute du condenseur. Dans ce cas, la vanne mélangeuse du premier circuit de chauffage du local est branchée sur le condenseur sensiblement au même niveau que la canalisation de retour dudit circuit de chauffage, tandis qu'un deuxième circuit de chauffage de local est branché en parallèle sur le circuit de chauffage d'eau sanitaire.

L'invention sera bien comprise et d'autres particularités apparaîtront à la lecture de la description qui va suivre et qui se rapporte aux dessins annexés dans lesquels:
- la figure 1 montre schématiquement en coupe une chaudière selon l'invention,
- la figure 2 montre plus particulièrement en éclaté et avec arrachement un condenseur selon l'invention,
- la figure 3 est un schéma d'une installation complète incorporant une chaudière selon l'invention.

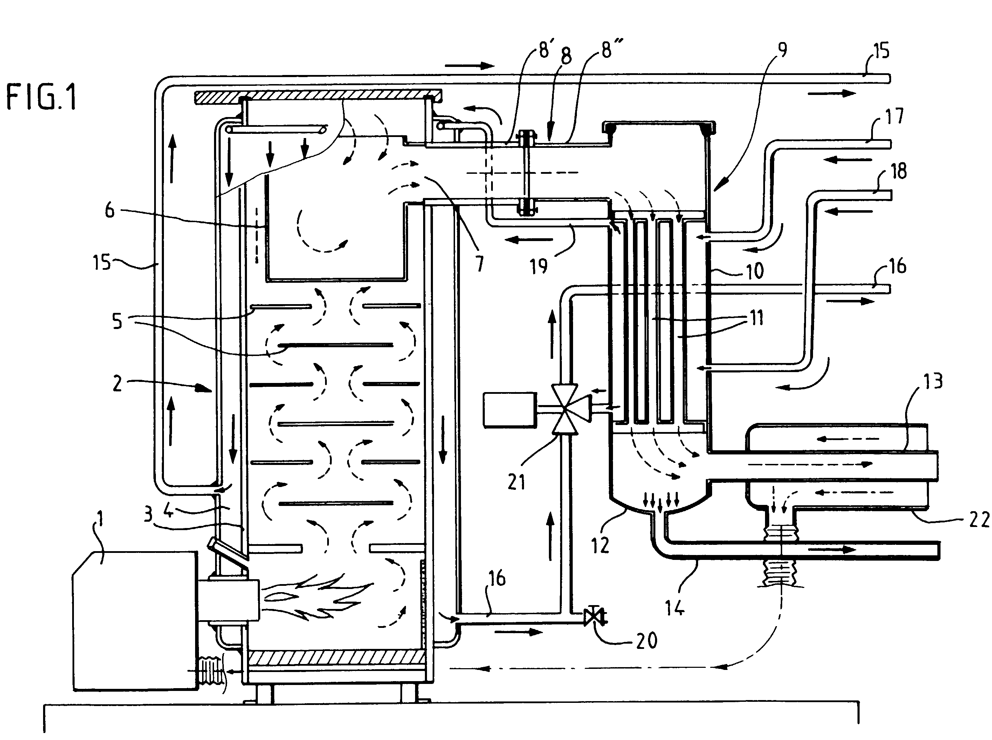

La figure 1 montre une chaudière pourvue d'un brûleur 1 à fuel par exemple, disposé en bas d'un échangeur de chaleur 2 formé par un corps cylindrique 3 disposé verticalement et entouré par une chemise 4 de fluide caloporteur et plus particulièrement d'eau. Pour améliorer les échanges thermiques, l'intérieur du corps cylindrique 3 dans lequel circulent les gaz de combustion est pourvu de chicanes 5 faisant l'objet d'un autre brevet, tandis que la partie supérieure est munie d'un pot 6 dans lequel arrivent les gaz de combustion qui peuvent en sortir par une ouverture 7 sur laquelle est branchée une partie 8′ d'une conduite 8.

La partie 8′ de la conduite 8 se prolonge par une partie 8˝ qui débouche en haut d'un condenseur 9.

Les partie 8′ et 8˝ constituent ainsi une conduite 8 de communication sensiblement horizontale entre les parties hautes respectivement de l'échangeur 2 et du condenseur 9.

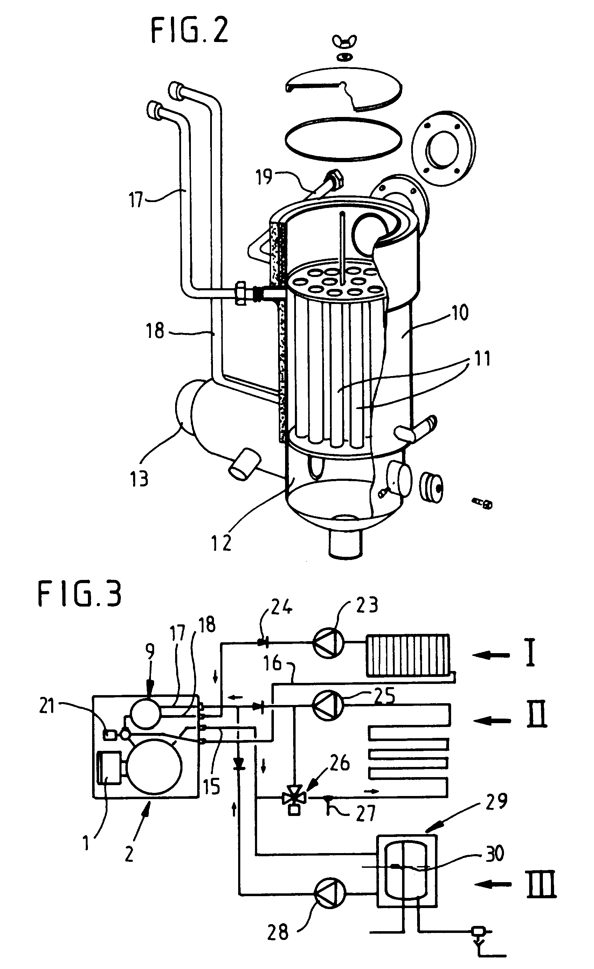

Le condenseur 9 est formé, comme le montre plus particulièrement la figure 2, par un cylindre 10 vertical dans lequel sont disposés une pluralité de tubes verticaux 11 destinés à la circulation des gaz de combustion et entre lesquels circule l'eau de chauffage en communication avec la chemise d'eau 4 comme il sera expliqué ci-après.

La condensation s'effectuera donc dans les tubes qui débouchent par leurs extrémités inférieures dans un collecteur 12 pour les condensats. Sur le collecteur 12 est branché un tuyau 13 d'évacuation des gaz et un tuyau 14 d'évacuation desdits condensats.

Comme le montre la figure 1, la partie supérieure de la chemise d'eau 4 est à un niveau plus élevé que la partie supérieure des surfaces d'échange du condenseur 9 tandis que l'échangeur 2 présente en outre une plus grande hauteur totale que le condenseur 9, le tout de manière à assurer une circulation des gaz de combustion comme indiqué par les flèches, c'est-à-dire de bas en haut dans le corps 3 de l'échangeur 2, horizontalement dans la conduite 8 et de haut en bas dans le condenseur 9. Cette structure permet une bonne circulation des gaz et évite une stagnation des gaz en haut du condenseur pendant les phases d'arrêt du brûleur. En effet, l'échangeur 2 fonctionne à un niveau de température supérieur à celui du condenseur 9 qui est aussi un échangeur et la hauteur dudit échangeur est supérieure, comme déjà dit, à celle dudit condenseur 9, de telle sorte qu'il résulte un mouvement naturel de convection qui refoule les gaz brûlés vers le bas du condenseur 9 et donc vers l'extérieur et non vers l'échangeur 2. On assure aussi une bonne collecte des condensats qui s'écoulent dans le même sens que les gaz de combustion.

Pour une bonne efficacité d'un condenseur, il est connu de bien laminer les gaz de combustion à refroidir, comme le fait le condenseur selon l'invention, mais il faut aussi bien irriguer le condenseur et avoir une température de paroi qui est sensiblement égale à la température de retour, la plus basse possible. C'est pourquoi les dispositions de tous les branchements de départ, de retour et de communication sont très importantes, et peuvent notamment être choisies de la manière décrite ci-après.

Dans la moitié inférieure de la chemise d'eau 4, sont branchées deux canalisations de départ respectivement 15 et 16 pour au moins deux circuits de chauffage, les branchements de ces canalisations étant éloignés l'un de l'autre, voire diamétralement opposés. La canalisation de départ 15 alimente donc un ou plusieurs circuits de chauffage qui sont munis d'une canalisation de retour 17 branchée ici dans la partie haute de circulation d'eau du condenseur 9, tandis que le ou les circuits de chauffage alimentés par la canalisation 16 sont munis d'une canalisation de retour 18 branchée sur le condenseur en partie basse (figures 1 et 2).

Comme le montrent bien les figures 1 et 2, la partie haute du circuit d'eau du condenseur 9 est en outre purvue d'une canalisation 19 de communication avec la partie haute de la chemise 4 de l'échangeur 2, la canalisation 19 s'étendant dans la chemise 4 sous la forme d'un anneau au moins partiel percé vers le bas comme le montre la figure 1, cette distribution dans la chemise 4 faisant déjà aussi l'objet d'un autre brevet.

La canalisation de départ 16 munie d'une vanne de vidange 20 est en outre pourvue d'une vanne mélangeuse 21 manuelle ou automatique qui est branchée en partie basse du circuit d'eau du condenseur 9.

On peut encore voir sur les figures 1 et 2 un conduit d'arrivée d'air 22 qui enveloppe concentriquement la conduite 13 afin d'assurer un réchauffement de l'air destiné à servir d'air comburant au brûleur 1 (voir raccordement schématisé sur la figure 1).

Comme le montre la figure 3, une chaudière selon l'invention est particulièrement bien adaptée pour des usages multiples.

Sur la figure 3, on retrouve le brûleur 1, l'échangeur 2, le condenseur 3, la vanne mélangeuse 21, les canalisations de départ 15, 16 et de retour 17 et 18.

Les canalisations de départ 16 et de retour 18 sont par exemple destinées à un circuit désigné par I figure 3, de chauffage par radiateurs, lequel circuit comporte en outre classiquement un circulateur 23 et un clapet anti-retour 24.

Ce circuit comporte la vanne mélangeuse 21 dont il a déjà été question.

Les canalisations 15 et 17 sont par exemple destinées à alimenter deux circuits référencés II et III sur la figure 3, respectivement, par exemple, pour un chauffage de type à plancher chauffant (circuit II) et un chauffage d'eau sanitaire (circuit III). Comme le montre la figure 3, le circuit II comporte un circulateur 25, une vanne mélangeuse 26, et une sonde thermique 27 tandis que le circuit III est pourvu d'un circulateur 28, d'un ballon d'eau chaude 29 et d'une sonde 30.

Comme on peut le voir sur la figure 3, les circuits II et III sont branchés en parallèle.

Il est clair que les branchements et en particulier leurs positions sont choisis en fonction de critères et de certaines caractéristiques des circuits à alimenter. C'est ainsi par exemple que la canalisation de retour 17, notamment du circuit de chauffage d'eau sanitaire généralement plus chaude, est branchée en partie haute du condenseur 9 (figures 1 et 2) pour garder la majeure partie du condenseur froid et pour l'éloigner de la canalisation de retour 18 du circuit de chauffage par radiateurs qui se branche en partie basse sensiblement au même niveau que le branchement de la vanne mélangeuse 21 (figure 1), cette dernière permettant d'assurer un mélange dans la canalisation de départ 16 dudit circuit de chauffage par radiateurs.

## Revendications

1. Chaudière à condensation et fluide caloporteur pourvue d'un brûleur (1); d'un échangeur (2) de chaleur qui est destiné aux échanges thermiques entre les gaz de combustion et ledit fluide caloporteur, et qui comporte, un corps creux dans la partie inférieure duquel est aménagé ledit brûleur, et une chemise (4) de circulation du fluide caloporteur; et d'un condenseur (9) dans lequel circule le fluide, et qui est disposé en série avec ledit échangeur, celui-ci et ledit condenseur (9) étant sensiblement verticaux et communiquant entre eux pour permettre l'écoulement des gaz de combustion par leurs parties hautes, tandis que les évacuations (13,14) de ces derniers et des condensats sont prévues en partie basse du condenseur de manière à assurer une circulation des gaz de combustion de bas en haut dans l'échangeur et de haut en bas dans le condenseur, les condensats s'écoulant dans le même sens que les gaz de combustion, chaudière caractérisée en ce que la partie haute du circuit de fluide du condenseur (9) communique directement avec la chemise (4) de circulation du fluide par au moins une canalisation (19) branchée en partie haute de cette dernière, ledit échangeur (2) présentant une plus grande hauteur que celle du condenseur (9).

2. Chaudière selon la revendication 1, caractérisée en ce que son condenseur (9) présente un faisceau de tubes (11) sensiblement parallèles et verticaux destinés à la circulation des gaz de combustion, le fluide circulant entre lesdits tubes tandis qu'un collecteur (12) des condensats est aménagé sous les tubes qui débouchent dans ledit collecteur (12).

3. Chaudière selon l'une des revendications 1 et 2, caractérisée en ce que la partie basse de la chemise (4) de circulation du fluide caloporteur est munie d'au moins deux canalisations de départ (15,16) du fluide chauffé pour au moins deux circuits de chauffage, tandis que des canalisations de retour (17,18) desdits circuits de chauffage sont branchées sur le condenseur (9).

4. Chaudière selon la revendication 3, caractérisée en ce que l'une des canalisations de départ (15) est prévue pour au moins deux circuits de chauffage (II et III).

5. Chaudière selon l'une des revendications 3 et 4, caractérisée en ce qu'au moins l'une des canalisations de retour (17) des circuits de chauffage est branchée en partie haute du condenseur (9) et qu'au moins une autre (18) est branchée en partie basse.

6. Chaudière selon l'une des revendications 3 à 5, caractérisée en ce que l'une au moins des canalisations de départ (16) de fluide chauffé est pourvue d'une vanne mélangeuse (21) branchée sur le circuit de fluide du condenseur (9).

7. Chaudière selon l'ensemble des revendications 3 à 6, caractérisée en ce que l'une (16) des canalisations de départ est prévue pour un premier circuit de chauffage (I) de local et comporte une vanne mélangeuse (21) branchée sur le circuit de fluide du condenseur (9), sa canalisation de retour (18) étant branchée en partie basse dudit condenseur (9) tandis que l'autre canalisation (15) de départ est prévue pour au moins un circuit de chauffage d'eau sanitaire (III), sa canalisation de retour (17) étant branchée en partie haute du condenseur (9).

8. Chaudière selon la revendication 7, caractérisée en ce que la vanne mélangeuse (21) du premier circuit de chauffage (I) du local est branchée sur le condenseur (9) sensiblement au même niveau que la canalisation de retour (18) dudit circuit de chauffage.

9. Chaudière selon l'une des revendications 7 et 8, caractérisée en ce qu'un deuxième circuit de chauffage (II) de local est branché en parallèle sur le circuit de chauffage (III) d'eau sanitaire.

## Patentansprüche

1. Brennwertkessel für Wärmetransportflüssigkeit, der mit einem Brenner (1), einem Wärmetauscher (2), der zum Wärmetausch zwischen dem Rauchgas und der Wärmetransportflüssigkeit dient und einen Hohlkörper, in dessen unterem Bereich der Brenner angeordnet ist, und einen Mantel (4) für den Kreislauf der Wärmetransportflüssigkeit aufweist, und mit einem Kondensator (9), in dem die Flüssigkeit zirkuliert und der in Reihe mit dem Wärmetauscher angeordnet ist, versehen ist, wobei der Wärmetauscher und der Kondensator (9) im wesentlichen vertikal und miteinander verbunden sind, um das Strömen der Rauchgase durch ihre oberen Teile zu ermöglichen, während die Auslässe (13, 14) für letztere und für das Kondensat im unteren Bereich des Kondensators derart vorgesehen sind, daß im Wärmetauscher eine Zirkulation der Rauchgase von unten nach oben und im Kondensator von oben nach unten bewirkt wird und das Kondensat in derselben Richtung wie die Rauchgase strömt und der Kessel
dadurch gekennzeichnet ist, daß der obere Teil des Flüssigkeitskreislaufs des Kondensators (9) direkt mit dem Mantel (4) des Flüssigkeitskreislaufs durch wenigstens eine Leitung (19), die am oberen Bereich des letzteren angeschlossen ist, in Verbindung steht und der Wärmetauscher (2) eine größere Höhe aufweist als die des Kondensators (9).

2. Kessel nach Anspruch 1, dadurch gekennzeichnet, daß sein Kondensator (9) ein Bündel von im wesentlichen parallelen und vertikalen Rohren (11) aufweist, die der Zirkulation der Rauchgase dienen, und die Flüssigkeit zwischen den Rohren zirkuliert und ein Kondensat-Sammelgefäß (12) unter den Rohren, die in das Sammelgefäß (12) münden, angeordnet ist

3. Kessel nach einem der Ansprüche 1 und 2, dadurch gekennzeichnet, daß der untere Teil des Mantels (4) für den Kreislauf der Wärmetransportflüssigkeit mit wenigstens zwei Vorlaufleitungen (15, 16) für die erwärmte Flüssigkeit für wenigstens zwei Heizkreise versehen ist, während die Rücklaufleitungen (17, 18) dieser Heizkreise an dem Kondensator (9) angeschlossen sind.

4. Kessel nach Anspruch 3, daduch gekennzeichnet, daß eine der Vorlaufleitungen (15) für wenigstens zwei Heizkreise (II und III) vorgesehen ist.

5. Kessel nach einem der Ansprüche 3 und 4, dadurch gekennzeichnet, daß wenigstens eine der Rücklaufleitungen (17) der Heizkreise im oberen Teil des Kondensators (9) und wenigstens eine andere (18) im unteren Teil angeschlossen ist.

6. Kessel nach einem der Ansprüche 3 bis 5, dadurch gekennzeichnet, daß wenigstens eine der Vorlaufleitungen (16) der erwärmten Flüssigkeit mit einem Mischer (21) versehen ist, der am Flüssigkeitskreislauf des Kondensators (9) angeschlosen.

7. Kessel nach einem der Ansprüche 3 bis 6, dadurch gekennzeichnet, daß eine (16) der Vorlaufleitungen für einen ersten Raum-Heizungskreis (I) vorgesehen ist und einen Mischer (21) aufweist, der am Flüssigkeitskreislauf des Kondensators (9) angeschlossen ist, während seine Rücklaufleitung (19) am unteren Teil des Kondensators (9) angeschlossen ist, und die andere Vorlaufleitung (15) für wenigstens einen Brauchwasser-Heizkreis vorgesehen und seine Rücklaufleitung (17) am oberen Bereich des Kondensators (9) angeschlossen ist.

8. Kessel nach Anspruch 7, dadurch gekennzeichnet, daß der Mischer (21) des ersten Raum-Heizungskreises (I) am Kondensator (9) im wesentlichen auf dem gleichen Niveau wie die Rücklaufleitung (18) dieses Heizungskreises angeschlossen ist.

9. Kessel nach einem der Ansprüche 7 und 8, dadurch gekennzeichnet, daß der zweite Raum-Heizungskreis (II) parallel zum Brauchwasser-Heizkreis (III) angeschlossen ist.

## Claims

1. Condensation boiler with a heat-conveying fluid provided with a burner (1), with a heat exchanger (2) which is intended for the heat exchanges between the combustion gases and said heat-conveying fluid and which comprises a hollow body in the lower part of which is arranged said burner, and a jacket (4) for circulation of the heat-conveying fluid, and with a condenser (9) in which the fluid circulates and which is disposed in series with said heat exchanger, the latter and said condenser (9) being substantially vertical and communicating with one another to permit the flow of the combustion gases through their upper parts, while the discharge outlets (13, 14) for the latter and the condensates are provided in the lower part of the condenser so as to ensure circulation of the combustion gases from the bottom upwards in the heat exchanger and from the top downwards in the condenser, the condensates flowing in the same direction as the combustion gases, said boiler being characterised in that the upper part of the fluid circuit of the condenser (9) communicates directly with the jacket (4) for circulation of the fluid through at least one pipe (19) connected to the upper part of the latter, said heat exchanger (2) having a greater height than that of the condenser (9).

2. Boiler according to claim 1, characterised in that its condenser (9) exhibits a bundle of tubes (11) which are substantially parallel and vertical and intended for circulation of the combustion gases, the fluid circulating between said tubes, while a collector (12) for the condensates is arranged under the tubes which debouch into said collector (12).

3. Boiler according to one of claims 1 and 2, characterised in that the lower part of the jacket (4) for circulation of the heat-conveying fluid is provided with at least two outlet pipes (15, 16) for the heated fluid for at least two heating circuits, while return pipes (17, 18) from said heating circuits are connected to the condenser (9).

4. Boiler according to claim 3, characterised in that one of the outlet pipes (15) is intended for at least two heating circuits (II and III).

5. Boiler according to one of claims 3 and 4, characterised in that at least one of the return pipes (17) from the heating circuits is connected to the upper part of the condenser (9) and in that at least one other (18) is connected to the lower part.

6. Boiler according to one of claims 3 to 5, characterised in that at least one of the outlet pipes (16) for heated fluid is provided with a mixer valve (21) connected to the fluid circuit of the condenser (9).

7. Boiler according to all of claims 3 to 6, characterised in that one of the outlet pipes (16) is intended for a first space heating circuit (I) and comprises a mixer valve (21) connected to the fluid circuit of the condenser (9), its return pipe (18) being connected to the lower part of said condenser (9), while the other outlet pipe (15) is intended for at least one sanitary water heating circuit (III), its return pipe (17) being connected to the upper part of the condenser (9).

8. Boiler according to claim 7, characterised in that the mixer valve (21) of the first space heating circuit (I) is connected to the condenser (9) substantially at the same level as the return pipe (18) from said heating circuit.

9. Boiler according to one of claims 7 and 8, characterised in that a second space heating circuit (II) is connected in parallel with the sanitary water heating circuit (III).
